Europäisches Patentamt

European Patent Office

Office européen des brevets

(19)

(11) Veröffentlichungsnummer: **0 150 401**
**A2**

(12) # EUROPÄISCHE PATENTANMELDUNG

(21) Anmeldenummer: 84115479.2

(51) Int. Cl.⁴: **G 01 N 27/12**

(22) Anmeldetag: 14.12.84

(30) Priorität: 23.12.83 DE 3346668

(43) Veröffentlichungstag der Anmeldung: 07.08.85
Patentblatt 85/32

(84) Benannte Vertragsstaaten: AT CH DE FR LI NL

(71) Anmelder: **Linde Aktiengesellschaft,
Abraham-Lincoln-Strasse 21, D-6200 Wiesbaden (DE)**

(72) Erfinder: **Strigl, Reinhard, Dipl.-Ing., Zeitlerstrasse 1,
D-8000 München 50 (DE)**
Erfinder: **Mahlo, Thomas, Dipl.-Ing., Isardamm 129,
D-8192 Geretsried 1 (DE)**

(74) Vertreter: **Schaefer, Gerhard, Dr., Linde
Aktiengesellschaft Zentrale Patentabteilung,
D-8023 Höllriegelskreuth (DE)**

(54) Verfahren und Vorrichtung zur Bestimmung des Kohlenstoffpegels einer Gasatmosphäre.

(57) Die Erfindung betrifft ein Verfahren zur Bestimmung des Kohlenstoffpegels einer Gasatmosphäre, bei dem ein metallischer Meßwiderstand der Gasatmosphäre ausgesetzt wird und der elektrische Widerstand des Meßwiderstandes mit dem eines Vergleichswiderstandes verglichen wird. Um den Kohlenstoffpegel einer Gasatmosphäre direkt und kontinuierlich bestimmen zu können, wird vorgeschlagen, ein band- oder drahtförmiges Metallteil mit bekanntem Kohlenstoffgehalt kontinuierlich in die Gasatmosphäre einzuleiten und aus dieser herauszuführen. Dabei wird das Metallteil über elektrische Kontakte geführt und der elektrische Widerstand des zwischen den elektrischen Kontakten befindlichen, konstant langen Teils des in Wechselwirkung mit der Gasatmosphäre gebrachten Metallteils als Meßwiderstand erfaßt.

EP 0 150 401 A2

ACTORUM AG

## Verfahren und Vorrichtung zur Bestimmung des
## Kohlenstoffpegels einer Gasatmosphäre

Die Erfindung betrifft ein Verfahren zur Bestimmung des Kohlenstoffpegels einer Gasatmosphäre, bei dem ein metallischer Meßwiderstand der Gasatmosphäre ausgesetzt wird und der elektrische Widerstand des Meßwiderstandes mit dem eines Vergleichswiderstandes verglichen wird.

Es sind verschiedene Verfahren zur Bestimmung des Kohlenstoffpegels einer Gasatmosphäre bekannt. So kann der Kohlenstoffpegel einer Ofenatmosphäre für das Gasaufkohlen oder kohlungsneutralen Glühen von metallischen Werkstücken durch Analyse des Wasser- oder Kohlendioxidgehaltes sowie mittels einer Sauerstoffzirkondioxidsonde erfaßt werden. Diese Verfahren ermöglichen eine kontinuierliche Bestimmung und damit eine automatische Kontrolle des Kohlenstoffpegels. Dabei werden immer nur einzelne Gasanteile der Ofenatmosphäre gemessen und über die Gasgleichgewichte der tatsächliche Kohlenstoffpegel errechnet und eingeregelt.

Bei diesen indirekten Verfahren zur Prozeßkontrolle wird die Zusammensetzung der Gasatmosphäre als Indikator für den Kohlenstoffpegel zugrundegelegt. Mit diesen indirekten Verfahren kann der Kohlenstoffpegel nicht mit der gewünschten Genauigkeit bestimmt werden.

Es sind auch Verfahren zur direkten Bestimmung des Kohlenstoffpegels einer Gasatmosphäre bekannt. Dabei wird der Kohlenstoffpegel mit Hilfe von Stahlfolien oder Drahtwendeln mit definiertem Kohlenstoffgehalt, die der Gasatmosphäre für die Dauer von 15 bis 30 Minuten ausgesetzt werden, bestimmt. Im Kontakt mit der Gasatmosphäre werden die Metallteile je nach Kohlenstoffpegel dieser Atmosphäre entweder aufgekohlt, entkohlt oder in ihrem Kohlenstoffgehalt nicht geändert. Der Kohlenstoffgehalt der Metallteile wird vor und nach dem Kontakt mit der Gasatmosphäre bestimmt. Dies kann beispielsweise durch Verbrennen in reinem Sauerstoff, durch Auswiegen oder durch Messung des elektrischen Widerstandes erfolgen. Diese Verfahren sind zwar sehr genau, jedoch ermöglichen sie nur eine diskontinuierliche Erfassung des Kohlenstoffpegels und sind daher zur automatischen Prozeßkontrolle ungeeignet.

Der Erfindung liegt daher die Aufgabe zugrunde, ein Verfahren der eingangs genannten Art anzugeben, mit dem der Kohlenstoffpegel einer Gasatmosphäre direkt und kontinuierlich bestimmt werden kann.

Diese Aufgabe wird erfindungsgemäß dadurch gelöst, daß ein band- oder drahtförmiges Metallteil mit bekanntem Kohlenstoffgehalt kontinuierlich in die Gasatmosphäre eingeleitet und aus dieser herausgeführt wird, derart, daß der Gasatmosphäre stets ein Abschnitt des Metallteiles ausgesetzt wird, wobei das Metallteil über elektrische Kontakte geführt und der elektrische Widerstand des zwischen den elektrischen Kontakten befindlichen, konstant langen Teils des in Wechselwirkung mit der Gasatmosphäre

- 3 -

0150401

gebrachten Metallteiles als Meßwiderstand erfaßt wird.

Erfindungsgemäß dient als Meßwiderstand ein Abschnitt eines draht- oder bandförmigen Metallteiles. Unter einem draht- oder bandförmigen Metallteil ist hierbei jedes Metallteil großer Länge mit je Längeneinheit konstant großer Oberfläche und definiertem Kohlenstoffgehalt zu verstehen, das leicht in einen Ofen mit der zu untersuchenden Gasatmosphäre einzuführen und aus diesem herauszuführen ist. Aus Kostengründen dürfte in der Regel ein Draht verwendet werden. Erfindungsgemäß wird das Metallteil beispielsweise von einer Spule abgehaspelt, durch den Ofen hindurchgeleitet und nach Bestimmung des unter dem Einfluß der Gasatmosphäre geänderten elektrischen Widerstandes auf eine weitere Spule aufgehaspelt. Der Gasatmosphäre ist folglich nur ein sehr kleiner Abschnitt des Metallteiles ausgesetzt. Der der Gasatmosphäre ausgesetzte Abschnitt wird ständig erneuert. Das bedeutet, daß in den Ofen pro Zeiteinheit ein konstant langes Metallteilstück eingeleitet und ein gleichlanges Stück aus dem Ofen abgezogen wird.

Beim erfindungsgemäßen Verfahren wird der unter dem Einfluß der Gasatmosphäre geänderte elektrische Widerstand des Metallteiles gemessen und mit einem Widerstand verglichen, der der Gasatmosphäre nicht ausgesetzt war. Dazu wird erfindungsgemäß das Metallteil über elektrische Kontakte geführt und der elektrische Widerstand des sich zwischen den elektrischen Kontakten erstreckenden Teilstückes bestimmt. Dieses Teilstück dient als Meßwiderstand. Dazu ist es erforderlich, daß dieses Teilstück stets konstant lang ist. Die elektrischen Kontakte können daher beispielsweise starr mit dem Ofen verbunden sein. Das Metallteil kann aber auch über eine vom Ofen getrennte Meßstrecke geführt werden.

- 4 -

0150401

Dem erfindungsgemäßen Verfahren liegt das bekannte Prinzip der Widerstandsmessung zur direkten Bestimmung des Kohlenstoffpegels zugrunde. Der elektrische Widerstand eines erfindungsgemäßen Metallteiles hängt außer von der Temperatur auch vom Kohlenstoffgehalt ab. Bei konstanter Temperatur nimmt der elektrische Widerstand mit wachsendem Kohlenstoffgehalt zu.

Zweckmäßigerweise dient als Vergleichswiderstand ein Metallteil, das dem durch den Ofen geführte Metallteil gleicht. Dabei muß die Länge des Vergleichswiderstandes mit der des Meßwiderstandes übereinstimmen. Um den Einfluß der Temperatur auf den elektrischen Widerstand auszuschalten, können z.B. die Temperaturen der beiden zu vergleichenden Widerstände aneinander angeglichen werden. Es ist auch möglich, diesen Einfluß meßtechnisch zu kompensieren.

Aufgrund eines Vergleichs zwischen Meßwiderstand und Vergleichswiderstand kann beim erfindungsgemäßen Verfahren ein Signal gebildet werden, mit dem die Zusammensetzung der Gasatmosphäre im Ofen und damit der Kohlenstoffpegel geregelt werden kann.

Das erfindungsgemäße Verfahren ermöglicht es, den Kohlenstoffübergang aus der Ofenatmosphäre an das zu glühende Material kontinuierlich und direkt zu messen. Das erfindungsgemäße Verfahren ist daher für eine automatische Prozeßkontrolle geeignet. Beim erfindungsgemäßen Verfahren zur Bestimmung des Kohlenstoffpegels einer Gasatmosphäre kann bis an die Grenze des Aufkohlungsvermögens dieser Atmosphäre gegangen werden. Eine erfindungsgemäße Sonde ist nicht empfindlich gegen Rußbildung. Außerdem ist die Lebensdauer praktisch unbegrenzt, da nur in größeren Zeitabständen das Metallteil (Drahtspule) gewechselt werden muß. Das erfindungsgemäße Verfahren wird mit besonderem Vorteil zur Optimierung von Aufkohlungsprozessen aber auch beim kohlungsneutralen Austenitisieren angewendet.

In einer vorteilhaften Ausgestaltung des Erfindungsgedankens wird der elektrische Widerstand des Abschnittes des Metallteiles erfaßt, der sich gerade in Kontakt mit der Gasatmosphäre befindet.

In dieser Variante wird das aktuelle Kohlenstoffpotential ohne jede Zeitverzögerung gemessen. Ein Regelungsvorgang wird daher besonders rasch ausgelöst, so daß Abweichungen vom angestrebten Kohlenstoffpotential minimal gehalten werden können.

Dabei kann aber in der Regel das beim Vergleich des Meßwiderstandes mit dem Vergleichswiderstand gebildete Signal nur weiterverarbeitet werden, wenn es temperaturkompensiert wurde. Mit Vorteil kann daher in einer anderen Ausgestaltung des erfindungsgemäßen Verfahrens der elektrische Widerstand des Metallteiles erfaßt werden, nachdem dieses aus der Gasatmosphäre herausgeleitet worden ist.

Als Meßwiderstand dient dabei ein Abschnitt des Metallteiles, der den Ofen bereits verlassen hat und sich im wesentlichen auf die Temperatur des Vergleichswiderstandes abgekühlt hat. Da sich beide Widerstände auf gleicher Temperatur befinden, ist der Einfluß der Temperaturen auf den elektrischen Widerstand ausgeschaltet. Daher ist eine Änderung des elektrischen Widerstandes allein auf dem geänderten Kohlenstoffgehalt zurückzuführen. Bei dieser Verfahrensvariante wird das Kohlenstoffpotential mit einer gewissen, aber tragbaren Zeitverzögerung gemessen.

Das erfindungsgemäße Verfahren gestaltet sich besonders einfach, wenn als Vergleichswiderstand ein Abschnitt des Metallteiles vor dessen Eintreten in die Gasatmosphäre dient.

Soll der Kohlenstoffpegel einer in einem Ofen eingeschlossenen Gasatmosphäre durch Vergleich elektrischer Widerstände in einer entsprechenden Vorrichtung bestimmt werden, so eignet sich eine Vorrichtung, die durch einen eine Wand des Ofens durchsetzenden Isolator mit einer Führungseinrichtung sowie durch ein draht- oder bandförmiges Metallteil, das innerhalb der Führungseinrichtung angeordnet und der Gasatmosphäre ausgesetzt ist, gekennzeichnet ist. Dabei liegt das Metallteil an wenigstens zwei elektrischen Kontakten an und wird mittels eines Antriebs relativ zu den elektrischen Kontakten und innerhalb der Führungseinrichtung relativ zum Isolator in Längsrichtung des Metallteiles bewegt. Außerdem ist die Länge des Metallteiles zwischen den elektrischen Kontakten konstant. Die elektrischen Kontakte, von denen einer in Bewegungsrichtung des Metallteiles am oder nach dem Ofen angeordnet ist, sind stromleitend an die Vorrichtung zum Vergleich elektrischer Widerstände angeschlossen.

Das erfindungsgemäße Metallteil wird mittels eines Antriebs in den Führungseinrichtungen eines in den Ofen hineinragenden Isolators bewegt und dabei der Gasatmosphäre ausgesetzt. Die Verwendung eines Isolators zur Führung des Metallteils stellt sicher, daß dieses ohne Kontakt mit stromleitenden Ofenbauteilen durch die Gasatmosphäre geleitet werden kann. Da die erfindungsgemäße Vorrichtung in der Regel in Öfen mit einer Gasatmosphäre hoher Temperatur Anwendung findet, eignet sich als Isolatormaterial besonders Keramik. Von den elektrischen Kontakten, über die das Metallteil vom Antrieb geführt wird, befindet sich einer in Bewegungsrichtung des Metallteiles am oder nach dem Ofenausgang für dieses Metallteil. Als Meßwiderstand wird also stets ein Abschnitt des Metallteils nach dem Verlassen des Ofens oder während des Aufenthalts im Ofen erfaßt.

Eine erfindungsgemäße Vorrichtung kann beispielsweise an einen Rechner angeschlossen werden. Dabei können Kohlenstoffdiffusionskurven vorgewählt und die Diffusion von Kohlenstoff in zu behandelnde Werkstücke nach diesen Kurven mittels der erfindungsgemäßen Vorrichtung geregelt werden.

Besonders einfach kann der Vergleich des elektrischen Widerstandes des Meß- und des Vergleichswiderstandes nach einer erfindungsgemäßen Ausgestaltung mittels einer Brückenschaltung, insbesondere einer Wheatstoneschen-Brücke erfolgen.

Wird nach einer vorteilhaften Weiterbildung einer erfindungsgemäßen Vorrichtung als Antrieb ein in Bewegungsrichtung des Metallteiles vor dem Ofen angeordneter Schubantrieb und/oder ein nach dem Ofen angeordneter Zugantrieb verwendet, so ist gewährleistet, daß die Länge des der Gasatmosphäre ausgesetzten Abschnittes des Metallteiles stets konstant ist. Insbesondere ist es möglich, innerhalb des Ofens eine Schleife zu bilden, die am Isolator nicht anliegt, deren gesamte Oberfläche daher der Gasatmosphäre ausgesetzt ist.

In einer vorteilhaften Variante einer erfindungsgemäßen Vorrichtung sind die beiden elektrischen Kontakte in Bewegungsrichtung des Metallteiles nach dem Ofen in festem Abstand zueinander angeordnet. In dieser Anordnung kann als Meßwiderstand ein Abschnitt des Metallteiles erfaßt werden, der den Ofen bereits verlassen hat und dieselbe Temperatur hat wie der Vergleichswiderstand.

In einer alternativen Variante der erfindungsgemäßen Vorrichtung ist der zweite elektrische Kontakt in Bewegungsrichtung des Metallteiles am oder vor dem Ofen angeordnet.
Auf diese Weise wird als Meßwiderstand der innerhalb des
Ofens verlaufende Abschnitt des Metallteiles erfaßt. Mit
dieser Vorrichtung kann das aktuelle Kohlenstoffpotential
ohne Zeitverzögerung bestimmt werden.

Nach einer weiteren Ausgestaltung einer erfindungsgemäßen
Vorrichtung ist es von Vorteil, als Vergleichswiderstand
einen Abschnitt des Metallteiles vor dessen Eintritt in
den Ofen zu wählen. Dazu sind erfindungsgemäß zwei weitere
elektrische Kontakte in Bewegungsrichtung des Metallteiles
vor dem Ofen angeordnet, die ihrerseits an die Vorrichtung
zum Vergleich elektrischer Widerstände angeschlossen sind.

Dient dabei als Meßwiderstand der jeweils innerhalb des
Ofen befindliche Abschnitt des Metallteils, so ist es
selbstverständlich, daß der als Vergleichswiderstand dienende Abschnitt mit den dazugehörenden elektrischen Kontakten
in Bewegungsrichtung des Metallteiles vor dem ersten,
zum Meßwiderstand gehörenden elektrischen Kontakt liegt.

In einer vorteilhaften Ausführungsform hat der Isolator
Rohrform und besitzt auf diametral gegenüberliegenden
Seiten Langlöcher, wobei das in den Ofeninnenraum ragende
Ende des Isolators  halbkugelförmig ausgebildet ist und
die Führungseinrichtung aus den beiden Langlöchern und
einer diese verbindenden Rille besteht, die sich auf der
Außenseite des Isolators befindet und über dessen halbkugelförmiges Ende führt.

Dabei kann das Metallteil zunächst über das Rohrinnere
in den Ofen geführt werden. Innerhalb des Ofens tritt
das Metallteil über das eine Langloch aus dem Rohr aus
und wird in der Rille über das halbkugelförmige Ende des Isolators geführt und nachfolgend in das zweite Langloch eingeleitet, so daß es den Ofen über das Rohrinnere wieder verläßt.

In einer anderen, besonders einfachen Ausführungsform ist der Isolator ein Zylinder, der zwei parallel zur Zylinderachse verlaufende Kanäle zur Führung des Metallteils besitzt. Dabei wird das Metallteil durch den Antrieb zweckmäßigerweise so geführt, daß sich innerhalb des Ofens eine Schleife bildet.

Um auszuschließen, daß über die Kanäle Luft in den Ofen eindringt und die Gasatmosphäre verunreinigt, hat es sich als vorteilhaft erwiesen, in die Kanäle ein Spülgas, beispielsweise Stickstoff, einzuleiten. Durch das Spülgas wird sichergestellt, daß im Isolator keine Beeinflussung des Drahtes mehr erfolgt und Lufteintritt in den Ofen verhindert wird.

Zu diesem Zweck mündet in jeden Kanal außerhalb des Ofens eine den Zylindermantel durchsetzende Bohrung, wobei beide Bohrungen an eine Spüleinrichtung angeschlossen sind.

Im folgenden soll anhand schematischer Skizzen Ausführungsbeispiele einer erfindungsgemäßen Vorrichtung erläutert werden.

In den beiden Figuren sind zwei verschiedene Ausführungsformen dargestellt. Teile, die dieselbe Funktion besitzen, sind mit denselben Bezugszeichen versehen.

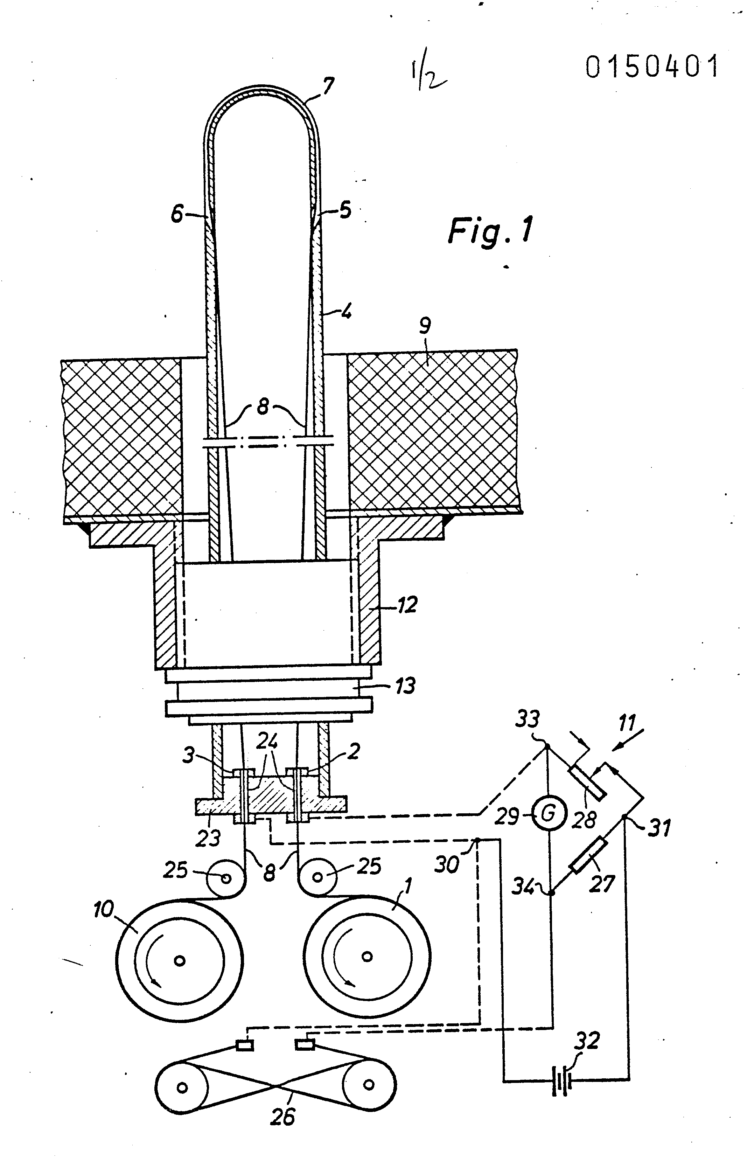

Mit der Anordnung gemäß Figur 1 soll beispielsweise das Kohlenstoffpotential eines aufkohlend wirkenden Ofens bestimmt und geregelt werden. Vom Ofen ist lediglich ein Teil einer Ofenwand 9 schematisch dargestellt. Diese Ofenwand 9 wird von einem Keramikrohr 4 durchsetzt.

0150401

Keramikrohr 4 ist mittels eines Flansches 12 an der Ofenwand 9 befestigt. Eine Stopfbuchse 13 dichtet den Ofen gegen die Außenatmosphäre ab. Im Keramikrohr 4 sind in dem innerhalb des Ofens befindlichen Teil zwei Langlöcher 5 und 6 ausgespart.Eine die beiden Langlöcher 5,6 verbindende Rille 7 führt über das halbkugelförmige Ende des Keramikrohres. Indem das andere Ende des Keramikrohres verschließenden Boden 23 sind zwei elektrische Kontakte mit Durchtrittsöffnungen 24 angeordnet.

Als Metallteil dient in den Ausführungsbeispielen Draht 8, der auf einer Drahtspule 1 aufgehaspelt ist. Dieser Draht 8 wird von Drahtspule 1 abgespult und über Führungsrollen 25 zum Ofen geleitet. Über die Durchtrittsöffnung des einen elektrischen Kontaktes 2 wird der Draht 8 zunächst in das Innere des Keramikrohres 4 und anschließend über Langloch 5 in den Ofeninnenraum geführt und damit in Kontakt mit der Ofenatmosphäre gebracht. Nach dem Austritt aus dem Langloch 5 wird der Draht 8 in der Rille 7 um das halbkugelförmige Ende des Keramikrohres geführt. Über Langloch 6 und Durchtrittsöffnung 24 im elektrischen Kontakt 3 wird der Draht 8 aus dem Ofen geleitet und über weitere Führungsrollen 25 auf eine weitere Spule 10 aufgehaspelt. Die Kontakte 2 und 3 sind so ausgebildet, daß der Draht 8 diese Kontakte innerhalb der Durchtrittsöffnungen 24 berührt und somit in stromleitender Verbindung mit den Kontakten 2, 3 steht.

In diesem Ausführungsbeispiel dient als Meßwiderstand der innerhalb des Ofens befindliche Abschnitt des Drahtes, d.h. also jener Drahtabschnitt, der sich gerade zwischen den elektrischen Kontakten 2 und 3 befindet. Erfindungsgemäß gilt es, den elektrischen Widerstand dieses Drahtabschnittes (Meßwiderstand) mit einem Vergleichswiderstand zu vergleichen. Als Vergleichswiderstand 26 dient in diesem Ausführungsbeispiel ein Drahtabschnitt der gleichen Art, die sich auf der Drahtspule 1 befindet, und der gleichen Länge, wie der sich zwischen den elektrischen Kontakten erstreckende Drahtabschnitt.

Der Vergleich des Meßwiderstandes mit dem Vergleichswiderstand erfolgt in einer Wheatstoneschen-Brücke 11. Um den elektrischen Widerstand des Meßwiderstandes zu messen, ist dieser mit dem Vergleichswiderstand 26 und zwei weiteren elektrischen Widerständen 27, 28 zu einem Viereck zusammengeschlossen. In bekannter Weise sind zwei gegenüberliegende Ecken 30,31 an eine Batterie 32 angeschlossen, während die beiden anderen Ecken 33, 34 (Brückendiagonale) über ein Galvanometer 29 verbunden sind. Mittels einer selbstabgleichenden Brücke kann rasch eine Änderung des elektrischen Widerstandes des Meßwiderstandes gegenüber dem des Vergleichswiderstandes ermittelt und in Form eines elektrischen Signales zur Regelung des Kohlenstoffpotentials weiterverarbeitet werden. Das elektrische Signal muß in diesem Ausführungsbeispiel temperaturkompensiert werden, da Meßwiderstand und Vergleichswiderstand unterschiedliche Temperaturen besitzen. Die Regelung des Kohlenstoffpotentials kann beispielsweise über die Regelung der Zufuhr einzelner Gaskomponenten in den Ofen erfolgen. Sowohl die zur Weiterverarbeitung des elektrischen Signals dienende Anlage als auch die Regelungseinrichtung sind bekannt und daher in der Skizze nicht dargestellt.

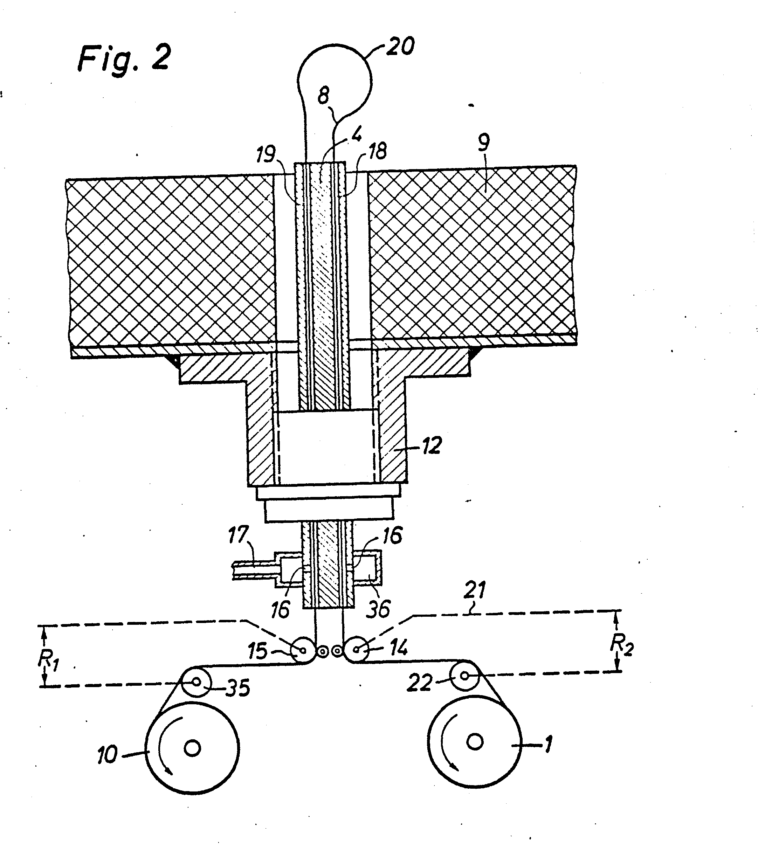

In Figur 2 ist ein anderes Ausführungsbeispiel einer erfindungsgemäßen Vorrichtung dargestellt. Isolator 4 ist hierbei ein Keramikzylinder mit zwei Kanälen 18,19. Innerhalb des Ofens ist keine weitere Führungseinrichtung für den Draht 8 vorgesehen, vielmehr wird der Draht 8 so über Kanal 18 in den Ofen geführt und über Kanal 19 aus dem Ofen geleitet, daß sich innerhalb des Ofens

0150401

eine konstant lange Drahtschleife 20 bildet. Zur Ausbildung der Drahtschleife 20 dienen ein Schubantrieb 14 und ein Zugantrieb 15. Von der Drahtrolle 1 wird ein Draht mit definiertem Kohlenstoffgehalt kontinuierlich über eine Kontaktrolle 22 zum Schubantrieb 14 geleitet. Dieser fördert den Draht 8 durch Kanal 18 in den Ofenraum. Dort wird die Drahtschleife 20 gebildet. Nach der Auf- oder Abkohlung im Ofen gelangt der Draht durch den Kanal 19 zum Zugantrieb 15. Über eine weitere Kontaktrolle 35 wird der Draht 8 Spule 10 zum Aufhaspeln zugeführt. An die Kontaktrolle 35 und den Zugantrieb 15 sowie an den Schubantrieb 14 und die Kontaktrolle 22 wird jeweils eine elektrische Spannung angelegt, die Widerstände R 1 und R 2 gemessen und über eine Wheatstonesche-Brücke miteinander vergleichen. Das so erhaltene Signal wird als Regelgröße für eine Kohlenstoffpotentialregelung im Ofen benutzt. Um ein Eindringen von Luft in die Ofenatmosphäre zu verhindern, werden die Kanäle 18 und 19 mit Stickstoff gespült. Dieser wird über eine Zuleitung 17, einen torusförmigen, das Keramikrohr 4 umschließenden Hohlraum 36 und Bohrungen 16, die den Hohlraum 36 mit den Kanälen 18 und 19 verbinden, zugeführt.

Patentansprüche

1. Verfahren zur Bestimmung des Kohlenstoffpegels einer Gasatmosphäre, bei dem ein metallischer Meßwiderstand der Gasatmosphäre ausgesetzt wird und der elektrische Widerstand des Meßwiderstandes mit dem eines Vergleichswiderstandes verglichen wird, dadurch gekennzeichnet, daß ein band- oder drahtförmiges Metallteil mit bekanntem Kohlenstoffgehalt kontinuierlich in die Gasatmosphäre eingeleitet und aus dieser herausgeführt wird, wobei das Metallteil über elektrische Kontakte geführt und der elektrische Widerstand des zwischen den elektrischen Kontakten befindlichen, konstant langen Teils des in Wechselwirkung mit der Gasatmosphäre gebrachten Metallteils als Meßwiderstand erfaßt wird.

2. Verfahren nach Anspruch 1, dadurch gekennzeichnet, daß der elektrische Widerstand des Abschnittes des Metallteils erfaßt wird, der sich gerade in Kontakt mit der Gasatmosphäre befindet.

- 2 -

0150401

3. Verfahren nach Anspruch 1, dadurch gekennzeichnet, daß der elektrische Widerstand des Metallteiles erfaßt wird, nachdem dieses aus der Gasatmosphäre herausgeleitet worden ist.

4. Verfahren nach Anspruch 2 oder 3, dadurch gekennzeichnet, daß als Vergleichswiderstand ein Abschnitt des Metallteiles vor dessen Eintreten in die Gasatmosphäre dient.

5. Vorrichtung zur Durchführung des Verfahrens nach einem der Ansprüche 1 bis 4, mit einem Ofen, in dem eine Gasatmosphäre eingeschlossen, und einer Vorrichtung zum Vergleich elektrischer Widerstände, gekennzeichnet durch einen eine Wand (9) des Ofens durchsetzenden Isolator (4) mit einer Führungseinrichtung (5,6,7,18,19) sowie durch ein draht- oder bandförmiges Metallteil (8), das innerhalb der Führungseinrichtung (5,6,7,18,19) angeordnet und der Gasatmosphäre ausgesetzt ist, wobei das Metallteil (8) an wenigstens zwei elektrischen Kontakten (2,3,15,35) anliegt und mittels eines Antriebes (14,15) relativ zu den elektrischen Kontakten (2,3,15,35) und innerhalb der Führungseinrichtung relativ zum Isolator (4) in Längsrichtung des Metallteiles (8) bewegbar ist und wobei die Länge des Metallteiles zwischen den elektrischen Kontakten (2,3,15,35) konstant ist und die elektrischen Kontakte (2,3,15,35), von denen einer (3,35) in Bewegungsrichtung des Metallteiles (8) am oder nach dem Ofen angeordnet ist, stromleitend an die Vorrichtung (11) zum Vergleich elektrischer Widerstände angeschlossen sind.

6. Vorrichtung nach Anspruch 5, dadurch gekennzeichnet, daß die elektrischen Kontakte (2,3,15,35) Teil einer Brückenschaltung, insbesondere einer Wheatstoneschen-Brücke (11) sind.

7. Vorrichtung nach einem der Ansprüche 5 oder 6, dadurch gekennzeichnet, daß der Antrieb ein in Bewegungsrichtung des Metallteiles (8) vor dem Ofen angeordneter Schubantritt (14) und/oder ein nach dem Ofen angeordneter Zugantrieb (15) ist.

8. Vorrichtung nach einem der Ansprüche 5 bis 7, dadurch gekennzeichnet, daß die beiden elektrischen Kontakte (15,35) in Bewegungsrichtung des Metallteiles (8) nach dem Ofen in festem Abstand zueinander angeordnet sind.

9. Vorrichtung nach einem der Ansprüche 5 bis 7, dadurch gekennzeichnet, daß der zweite elektrische Kontakt (2) in Bewegungsrichtung des Metallteiles (8) am oder vor dem Ofen angeordnet ist.

10. Vorrichtung nach einem der Ansprüche 5 bis 9, dadurch gekennzeichnet, daß zwei weitere elektrische Kontakte (21,22) in Bewegungsrichtung des Metallteiles (8) vor dem Ofen angeordnet sind, die ihrerseits an die Vorrichtung zum Vergleich elektrischer Widerstände (11) angeschlossen sind.

11. Vorrichtung nach einem der Ansprüche 5 bis 10, dadurch gekennzeichnet, daß der Isolator (4) Rohrform hat, auf diametral gegenüberliegenden Seiten Langlöcher (5,6) besitzt und das in den Ofeninnenraum ragende Ende des Isolators (4) halbkugelförmig ausgebildet ist, wobei die Führungseinrichtung aus den beiden Langlöchern (5,6) und einer diese verbindenden Rille (7) besteht, die sich auf der Außenseite des Isolators (4) befindet und über dessen halbkugelförmiges Ende führt.

12. Vorrichtung nach einem der Ansprüche 5 bis 10, dadurch

- 4 -                                    0150401

gekennzeichnet, daß der Isolator (4) ein Zylinder ist, der zwei parallel zur Zylinderachse verlaufende Kanäle (18,19) zur Führung des Metallteiles (8) besitzt.

13. Vorrichtung nach Anspruch 12, dadurch gekennzeichnet, daß in jeden Kanal (18,19) außerhalb des Ofens eine den Zylindermantel durchsetzende Bohrung (16) mündet und beide Bohrungen (16) an eine Spüleinrichtung (17, 36) angeschlossen sind.

1/2

0150401

*Fig.1*

0150401

*Fig. 2*